# EUROPÄISCHE PATENTSCHRIFT

(11) **EP 0 695 406 B1**
(45) Veröffentlichungstag und Bekanntmachung des Hinweises auf die Patenterteilung: **29.10.1997**
(21) Anmeldenummer: 95909754.4
(22) Anmeldetag: 21.02.1995
(51) Int. Cl.: F16K 31/06

(54) **MAGNETVENTIL**
MAGNETIC VALVE
ELECTROVANNE

(30) Priorität: 22.02.1994 DE 4405657
(43) Veröffentlichungstag der Anmeldung: 07.02.1996
(73) Patentinhaber: Bürkert Werke GmbH & Co., D-74653 Ingelfingen (DE)
(72) Erfinder: PIELOTH, Manfred, D-01069 Dresden-Mitte (DE); SCHREPEL, Dieter, D-01468 Friedewald (DE); TÖPFER, Heinz, D-01277 Dresden (DE)
(74) Vertreter: Degwert, Hartmut, Dipl.-Phys.
(86) Internationale Anmeldenummer: EP9500619
(87) Internationale Veröffentlichungsnummer: WO9522709

(56) Entgegenhaltungen:
- EP-A- 0 488 262
- DE-U- 7 324 333
- FR-A- 2 103 773

## Beschreibung

Die Erfindung betrifft ein Magnetventil mit einem länglich gestreckten quaderförmigen Ventilgehäuse, in dem zwei Dichtsitze und eine längliche Kammer gebildet sind, mit einem balkenförmigen Anker, der in der Kammer aufgenommen und durch eine Rückstellfeder in eine von zwei Schaltstellungen vorbelastet ist, und mit einer Elektromagneteinheit, die mit dem Ventilgehäuse auf dessen den Dichtsitzen gegenüberliegender Seite zusammengefügt ist, wobei der Anker auf seiner der Elektromagneteinheit zugewandten Seite eine stumpfe Kante aufweist und schwenkbar gelagert ist und die Rückstellfeder in eine Einsenkung des Ankers auf dessen den Dichtsitzen gegenüberliegender Seite eingreift sowie am Ventilgehäuse lagefixiert ist.

Ein Magnetventil dieser Bauform ist aus der französischen Patentschrift 2 103 773 bekannt. Der Anker dieses Magnetventils enthält einen oder mehrere Dauermagnete, die die Wirkung der Feder in der Ruhestellung unterstützen. Gegen seitliches Verschieben ist der Anker durch zwei Lagerzapfen gesichert, die in in das Ventilgehäuse eingearbeitete Ausnehmungen eingreifen. Das Magnetventil weist außerdem noch eine aus einem Druckknopf, einer Feder, einer Stange und einem L-förmig abgebogenen Stoßblech bestehende Handbetätigung auf.

Ferner ist ein Magnetventil ähnlicher Bauform aus der deutschen Gebrauchsmusterschrift 73 24 333 bekannt. Der Anker dieses Magnetventils ist auf einer Schneide verschwenkbar gelagert. Die als einfache Schraubenfeder ausgebildete Rückstellfeder greift an einem der beiden Enden des Ankers an und drückt dieses vom Boden des Ventilgehäuses fort, wobei die benachbarte Dichtung von ihrem Dichtsitz abgehoben und am gegenüberliegenden Ende des Ankers die zweite Dichtung gegen ihren Dichtsitz angedrückt wird. Beide Dichtungen sind in eine Membran integriert, durch welche die Ventilkammer von der dem Elektromagnet benachbarten Kammer getrennt wird, in welcher der Anker angeordnet ist.

Diese bekannten Magnetventile eignen sich gut für kompakte und schmale Bauformen. Einer weiteren Miniaturisierung sind jedoch Grenzen gesetzt, weil die lagefixierte Lagerung des Ankers bei kleinen Abmessungen hinsichtlich Montage und Fertigungstoleranzen problematisch wird.

Durch die Erfindung wird ein Magnetventil zur Verfügung gestellt, das eine weitere Miniaturisierung und sehr schmale Bauformen zuläßt, da es aus wenigen, einfach herstellbaren Einzelteilen besteht, und durch den Wegfall von Justierarbeiten eine einfache, bei Bedarf automatisierte Montage sowie eine einfache Wartung ermöglicht.

Das erfindungsgemäße Magnetventil zeichnet sich dadurch aus, daß der Anker lose in die Kammer des Ventilgehäuses eingesetzt und mit seiner stumpfen Kante auf einer ebenen Stützfläche ohne Lagefixierung gelagert ist. Der Anker verfügt somit nicht über eine im Raume festliegende Schwenkachse, sondern ist mit seiner stumpfen Kante auf der ebenen Stützfläche lediglich abgestützt; die Lage der Schwenkachse des Ankers in der Ebene der Stützfläche ergibt sich ohne Zwangseinwirkung durch das sich selbsttätig einstellende Gleichgewicht zwischen allen beteiligten Abstütz- und Reibungskräften, die durch die Kraft der Rückstellfeder induziert werden.

Um zu vermeiden, daß bei Einwirkung von harten Stößen der Anker aus seiner Funktionsstellung ausbricht, ist er von den Innenwänden der Kammer des Ventilgehäuses eng umgeben und weist von diesen nur den für seine freie Beweglichkeit gerade ausreichenden Abstand auf. Unter Stoßeinwirkung oder bei Erschütterungen bilden die Innenwände der Kammer somit Anschlagflächen für den Anker.

Bei der bevorzugten Ausführungsform ist in der Einsenkung des Ankers zugleich eine der beiden Dichtungen angeordnet, die mit einem gegenüberliegenden Dichtsitz zusammenwirkt, welcher sich am Ende einer in die Ventilkammer hineinragenden Düse befindet. Die als einfache Schraubenfeder ausgebildete Rückstellfeder umgreift die Düse und ist durch diese am Boden der Ventilkammer lagefixiert.

Bei Bedarf wird eine zweite Dichtung gleichfalls in einer Einsenkung des Ankers angeordnet, die sich auf der von der ersten Dichtung abgewandten Seite in Gegenüberlage zu dem zugehörigen Dichtsitz befindet, der gleichfalls am Ende einer in die Ventilkammer hineinragenden Düse gebildet ist.

Das Magnetventil eignet sich gut für eine fortgeschrittene Miniaturisierung, da es aus wenigen Einzelteilen besteht. Diese sind aufgrund ihrer einfachen Form leicht herstellbar. Der Anker ist gleichzeitig Antriebselement und Betätigungselement und stellt das einzige bewegte Teil dar. Er trägt die Dichtungen und ist lose ohne festes Gelenk oder Lager in die Kammer des Ventilgehäuses eingelegt. Durch die geringe Anzahl von Einzelteilen wird auch eine ungünstige Summierung von Fertigungstoleranzen vermieden. Zur Montage des Ventils müssen lediglich zwei Teile, nämlich Anker und Rückstellfeder, in die Kammer des Ventilgehäuses eingelegt werden; dieser Vorgang ist einer Automatisierung zugänglich.

Schließlich wird auch eine hohe Schaltgeschwindigkeit des Ventils durch seinen einfachen Aufbau und durch die geringe Masse des einzig bewegten Teiles, nämlich des Ankers, begünstigt; zugleich wird eine überaus hohe Zahl von Schaltspielen erreicht.

Bei einer alternativen Bauform des erfindungsgemäßen Magnetventils ist die Kammer, in welcher der Anker angeordnet ist, durch eine Membran von der angrenzenden Ventilkammer abgetrennt. Diese Bauform zeichnet sich durch ein besonders kleines Totvolumen aus. Die Membran weist zwei angeformte Dichtungen in Gegenüberlage zu den Dichtsitzen am Boden der Ventilkammer auf. Die Betätigung der Dichtungen erfolgt jeweils über einen Stößel, der an seinem einen Ende gelenkig an der Membran und an seinem anderen Ende gelenkig am Anker angeschlossen ist, vorzugsweise mittels eines in einer Einsenkung des Ankers eingesetzten Gummiteils, in welches das Ende des Stößels eingelassen ist.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: eine schematische Schnittansicht einer ersten Ausführungsform des Magnetventils;
- Fig. 2: eine Draufsicht auf den Boden der Ventilkammer des Magnetventils;
- Fig. 3: einen Teilschnitt einer Ausführungsvariante des Magnetventils;
- Fig. 4: einen Teilschnitt einer zweiten Ausführungsform des Magnetventils; und
- Fig. 5a, 5b und 5c: verschiedene Anordnungen einer Dichtung des Magnetventils.

Das Magnetventil besteht aus zwei aneinandergefügten Baugruppen, einem Ventilgehäuse 10 mit den Funktionsteilen des Ventils und einer Elektromagneteinheit 12, die an die offene Oberseite des Ventilgehäuses 10 angefügt und dicht mit diesem verbunden ist. Ventilgehäuse 10 und Elektromagneteinheit 12 bilden jeweils für sich und auch gemeinsam einen schmalen Quader.

Die Elektromagneteinheit 12 besteht aus einem U-förmigen Magnetjoch 14 und einer auf deren einen Pol 16 aufgebrachten Magnetspule 18. Das Magnetjoch 14 und die Magnetspule 18 sind in einen Kunststoffblock 20 eingebettet. Der zweite Pol 22 des Magnetjochs 14 liegt an einem Außenende des länglich gestreckten, quaderförmigen Ventilgehäuses 10, und der Pol 16 liegt etwa in der Mitte über dem Ventilgehäuse 10. Die Polflächen liegen fluchtend in der Trennebene 24 zwischen dem Ventilgehäuse 10 und der Elektromagneteinheit 12.

Im Inneren des Ventilgehäuses 10 ist eine länglich gestreckte, quaderförmige Kammer 26 gebildet. In dieser Kammer 26 ist ein balkenförmiger Anker 28 angeordnet. Dieser Anker 28 weist auf seiner der Elektromagneteinheit 12 zugewandten Seite eine stumpfe Kante 30 auf, mit welcher er schwenkbar auf der durch die Trennebene 24 gebildeten Stützfläche abgestützt ist. Durch die Bodenwand des Ventilgehäuses 10 erstrecken sich drei Kanäle 32, 34 und 36, von denen die äußeren, 32 und 36, mit je einer Düse 38 bzw. 40 in das Innere der Kammer 26 hineinragen. In Gegenüberlage zu diesen Düsen 38, 40 ist der Anker 28 mit je einer Einsenkung 42 bzw. 44 versehen. In diese Einsenkungen 42, 44 ist jeweils eine scheibenförmige Dichtung 46 bzw. 48 aus Elastomermaterial, z.B. Gummi, eingesetzt. Eine schraubenförmige Rückstellfeder 50 umgreift mit ihrem einen Ende am Boden der Kammer 26 die Düse 40 und greift mit ihrem anderen Ende in die Einsenkung 44 des Ankers 28 ein. Die freien Enden der Düsen 38, 40 bilden jeweils einen ringförmigen Dichtsitz zum Zusammenwirken mit der gegenüberliegenden Dichtung 46 bzw. 48.

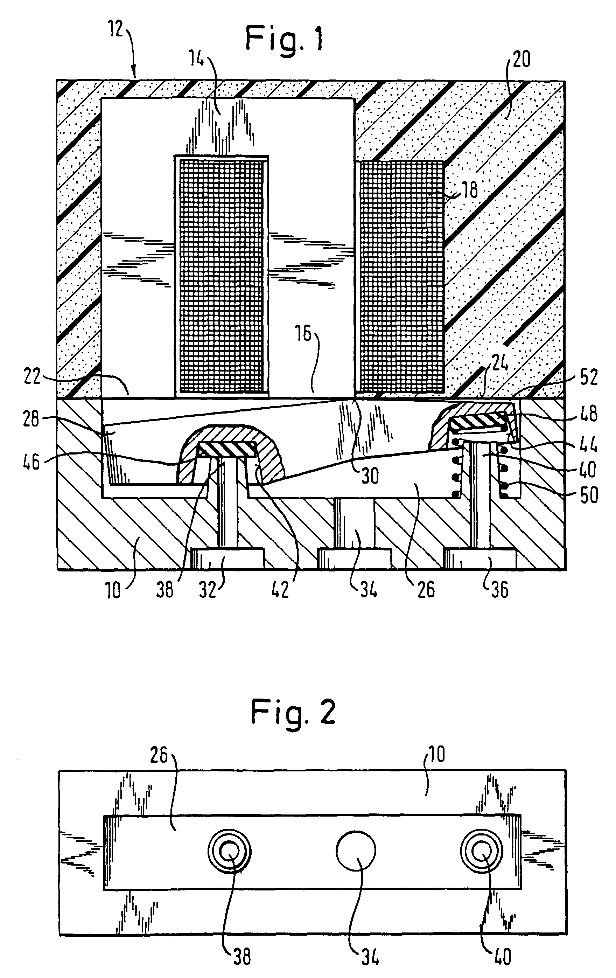

Der Anker 28 ist lose und ohne Lagefixierung in die Kammer 26 eingelegt. Er wird von den Innenwänden der Kammer 26 mit geringstmöglichem Spiel für eine freie Beweglichkeit umgeben. Die Innenwände der Kammer 26 bilden so lediglich Anschlagflächen für den Anker 28, die verhindern, daß dieser bei harter Stoßbeanspruchung des Magnetventils aus seiner Funktionsstellung ausbricht. Die stumpfe Kante 30 des Ankers 28 nimmt auf der durch die Trennebene 24 gebildeten Stützfläche selbsttätig eine optimale Lage ein, die durch das Gleichgewicht aller beteiligten Stütz- und Reibungskräfte, die durch die Rückstellfeder 50 induziert werden, bestimmt wird. Die Rückstellfeder 50 hält den Anker 28 durch ihre Quersteifigkeit in der gewünschten Funktionsstellung, in der sich die Dichtungen 46 und 48 annähernd mittig über den zugeordneten Dichtsitzen befinden. Die genaue Lage ist jedoch unkritisch. Die Rückstellfeder 50 drückt den zugeordneten Schenkel des Ankers 28 vom Boden der Kammer 26 fort und bringt zugleich die Dichtung 46 in Anlage an ihren Dichtsitz. In diesem, in Fig. 1 gezeigten ersten Schaltzustand ist die Dichtung 48 von dem zugeordneten Dichtsitz abgehoben, so daß eine Strömungsverbindung zwischen den Kanälen 34 und 36 über die Kammer 26 besteht. Wie weiterhin aus Fig. 1 ersichtlich ist, verbleibt in diesem Schaltzustand ein schmaler keilförmiger Spalt 52 zwischen dem Anker 28 und der Trennebene 24. Durch diesen Spalt wird ein Ankleben des Ankers aufgrund von magnetischer Remanenz oder von Flüssigkeitsresten vermieden.

Bei Aktivierung der Elektromagneteinheit 12 durch Erregung der Magnetspule 18 wird der von der Rückstellfeder 50 abgewandte Schenkel des Ankers 28 an die Pole 16, 22 des Magnetjochs 14 angezogen. Bevor aber eine flächige Anlage erfolgt, wird die Dichtung 48 auf den zugehörigen Dichtsitz gedrückt, so daß auch hier ein schmaler, keilförmiger Spalt, wie der Spalt 52 im anderen Schaltzustand, gebildet wird, um ein Ankleben des Ankers zu vermeiden.

Das Magnetventil eignet sich gut zur fortgeschrittenen Miniaturisierung, da esaus wenigen, einfach herstellbaren Einzelteilen besteht. Zur Montage müssen lediglich zwei Einzelteile, der Anker 28 und die Rückstellfeder 50, in die Kammer 26 eingelegt werden. Keinerlei Justierarbeit ist erforderlich. Die Elektromagneteinheit 12 kann mit dem Ventilgehäuse 10 verschweißt oder verklebt werden. Der so entstandene flache Quader eignet sich auch gut zum Aufbau von Seite an Seite aneinandergereihten Ventilgruppen.

Das beschriebene Magnetventil kann als Einzelventil zum Schalten kleiner Durchflußmengen oder auch als Vorsteuerventil für Ventile zum Schalten größerer Durchflußmengen eines Mediums verwendet werden. Wegen der geringen Masse seiner bewegten Teile erlaubt es eine hohe Schaltgeschwindigkeit und eine sehr große Zahl von Schaltspielen.

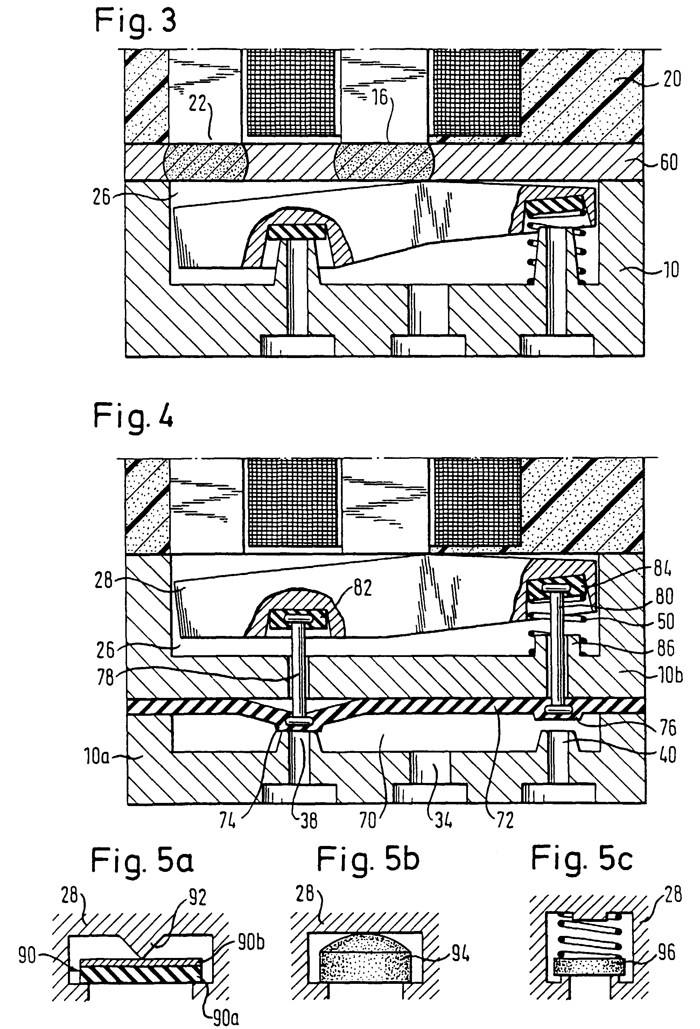

Bei der in Fig. 3 gezeigten Ausführungsvariante ist zwischen dem Ventilgehäuse 10 und dem die Elektromagneteinheit enthaltenden Block 20 eine Trennplatte 60 eingefügt. Durch die Trennplatte 60, die an der Oberseite des Ventilgehäuses 10 dicht befestigt ist, verschließt die Kammer 26, so daß bei Bedarf der Block 20 mit der Elektromagneteinheit ohne Öffnen der Kammer 26 entfernt werden kann. Die Trennplatte 60 ist in ihren den Polen 16 und 22 gegenüberliegenden Bereichen magnetisch leitend, sonst aber überall unmagnetisch ausgebildet. Die selektive magnetische Leitfähigkeit kann durch Einbinden von magnetisch leitendem Material wie Eisen in magnetisch nichtleitendes Material wie Messing oder Kunststoff ausgebildet werden; möglich ist auch die Ausbildung der Trennplatte 60 aus einer speziellen Eisenlegierung, die partiell magnetisch leitend gemacht werden kann.

In der Ausbildung des Ventilteils unterscheidet sich die Ausführungsvariante nach Fig. 3 nicht von der zuvor beschriebenen Ausführungsform.

Bei der Ausführungsform nach Fig. 4 ist die Kammer 26, in welcher der Anker 28 in gleicher Weise wie bei den zuvor beschriebenen Ausführungen aufgenommen ist, getrennt von einer Ventilkammer 70 ausgebildet. Die Ventilkammer 70 ist in einem gesonderten, flachen Ventilgehäuse 10a gebildet, dessen Bodenbereich weitgehend mit den bisher beschriebenen Ausführungen übereinstimmt. Zwischen dem Ventilgehäuse 10a und dem die Kammer 26 bildenden Zwischengehäuse 10b ist eine Membran 72 an ihrem Außenrand eingespannt. Die Membran 72 ist in Gegenüberlage zu den ringförmigen Dichtsitzen, die an den freien Enden der in die Ventilkammer 70 hineinragenden Düsen 38 und 40 gebildet sind, mit je einem integral angeformten Dichtelement 74 bzw. 76 versehen. Über diesen Dichtelementen 74, 76 ist jeweils ein verbreitertes Endstück eines Betätigungsstößels 78 bzw. 80 an die Membran 72 gelenkig angeschlossen, beispielsweise durch Einlassen oder Einknöpfen in die aus gummielastischem Material bestehende Membran 72. Die Betätigungsstößel 78, 80 ragen durch geeignete Öffnungen im Boden des Zwischengehäuses 10b in die Kammer 26 hinein und sind mit ihren entsprechenden Enden gelenkig an den Anker 28 angeschlossen. Die Anlenkung der Betätigungsstößel 78, 80 an den Anker 28 erfolgt jeweils mittels eines scheibenförmigen Ankopplungselements 82 bzw. 84, das in die entsprechende Einsenkung des Ankers 28 eingesetzt ist. Die verbreiterten Enden der Betätigungsstößel 78, 80 sind in das gummielastische Material der Ankopplungselemente 82, 84 eingelassen oder eingeknöpft. Die Rückstellfeder 50 umgreift bei dieser Ausführungsform einen Ringbund 86, der vom Boden der Kammer 26 in diese hineinragt und die Öffnung verlängert, durch welche sich der Betätigungsstößel 80 erstreckt.

Bei der in Fig. 4 gezeigten Ausführungsform erfolgt die Betätigung der Dichtelemente 74, 76 im Unterschied zu den bisher beschriebenen Ausführungen nicht direkt über den Anker 28, sondern mittelbar über die Betätigungsstößel 78, 80. Da der Anker 28 außerhalb der Ventilkammer 70 angeordnet ist, kann das Totvolumen der Ventilkammer sehr klein sein. Die Anordnung und Lagerung des Ankers 28 stimmt mit den zuvor beschriebenen Ausführungen überein und weist dieselben Vorteile auf.

Die Figuren 5a, 5b und 5c zeigen Ausführungsvarianten, bei denen ein Dichtelement auf verschiedene Weise am Anker beweglich abgestützt ist.

Bei Fig. 5a ist ein scheibenförmiges Dichtelement 90, das aus einer starren Scheibe 90b und einer damit in Verbund gebrachten Elastomerschicht 90a besteht, auf einem Kegel 92 am Boden einer Einsenkung des Ankers 28 beweglich abgestützt. Diese Abstützung des Dichtelements 90 gleicht einem Spitzenlager, das eine Schwenkbewegung nach allen Richtungen zuläßt, so daß sich das Dichtelement selbsttätig mit gleichmäßiger Druckverteilung an den zugehörigen ringförmigen Dichtsitz anlegt.

Bei Fig. 5b ist ein Dichtelement 94 mit einer kalottenförmigen Rückenfläche nach allen Seiten schwenkbeweglich am Boden der Einsenkung des Ankers 28 aufgenommen. Auch hier erfolgt eine selbsttätige Ausrichtung des Dichtelements 94 an dem zugehörigen Dichtsitz.

Schließlich zeigt Fig. 5c ein scheibenförmiges Dichtelement 96, das auf seiner Rückseite mittels einer Schraubenfeder am Boden der Einsenkung des Ankers 28 abgestützt ist und durch diese nachgiebige Abstützung in der Lage ist, sich optimal nach dem zugehörigen Dichtsitz auszurichten.

## Patentansprüche

1. Magnetventil mit einem länglich gestreckten quaderförmigen Ventilgehäuse (10; 10a), in dem zwei Dichtsitze und eine längliche Kammer (26) gebildet sind, mit einem balkenförmigen Anker (28), der in der Kammer (26) aufgenommen und durch eine Rückstellfeder (50) in eine von zwei Schaltstellungen vorbelastet ist, und mit einer Elektromagneteinheit (12), die mit dem Ventilgehäuse (10; 10a) auf dessen den Dichtsitzen gegenüberliegender Seite zusammengefügt ist, wobei der Anker (28) auf seiner der Elektromagneteinheit (12) zugewandten Seite eine stumpfe Kante (30) aufweist und schwenkbar gelagert ist und die Rückstellfeder (50) in eine Einsenkung (44) des Ankers (28) auf dessen den Dichtsitzen gegenüberliegender Seite eingreift sowie am Ventilgehäuse (10) lagefixiert ist, dadurch gekennzeichnet, daß der Anker (28) lose in die Kammer (26) eingesetzt und mit seiner stumpfen Kante (30) auf einer ebenen Stützfläche (24) ohne Lagefixierung gelagert ist.

2. Magnetventil nach Anspruch 1, dadurch gekennzeichnet, daß die Innenwände der Kammer (26) Anschlagflächen für den Anker (28) bilden, der in beiden Schaltstellungen einen für seine freie Beweglichkeit gerade ausreichenden Abstand von den Innenwänden der Kammer (26) aufweist.

3. Magnetventil nach Anspruch 1 oder 2, dadurch gekennzeichnet, daß die Einsenkung (44) des Ankers (28) in Gegenüberlage zu einem der Dichtsitze angeordnet ist.

4. Magnetventil nach Anspruch 3, dadurch gekennzeichnet, daß in Gegenüberlage zu dem anderen Dichtsitz eine weitere Einsenkung (42) in dem Anker (28) ausgebildet ist.

5. Magnetventil nach Anspruch 4, dadurch gekennzeichnet, daß in den Einsenkungen (42, 44) des Ankers (28) je eine Dichtung (46, 48) angeordnet ist und die Dichtsitze jeweils am Ende einer in die Kammer hineinragenden Düse (38, 40) gebildet sind.

6. Magnetventil nach Anspruch 5, dadurch gekennzeichnet, daß die Dichtungen (46, 48) in den Einsenkungen des Ankers (28) allseitig beweglich abgestützt sind.

7. Magnetventil nach Anspruch 5 oder 6, dadurch gekennzeichnet, daß die schraubenförmig ausgebildete Rückstellfeder (50) eine der Düsen (40) umgreift.

8. Magnetventil nach Anspruch 4, dadurch gekennzeichnet, daß in den Einsenkungen Betätigungsstößel (78, 80) jeweils gelenkig an den Anker (28) angeschlossen sind und die Betätigungsstößel (78, 80) durch Öffnungen in einer Bodenwand der Kammer (26) sowie in eine angrenzende Ventilkammer (70) hineinragen, die von der Kammer (26) durch eine Membran (72) abgetrennt ist und die Dichtsitze aufweist, und daß die Betätigungsstößel (78, 80) an ihrem vom Anker (28) abgewandten Ende an die Membran (72) angeschlossen sind, die in Gegenüberlage zu den Dichtsitzen je ein angeformtes Dichtelement (74, 76) aufweist.

9. Magnetventil nach Anspruch 8, dadurch gekennzeichnet, daß eine der Öffnungen der Bodenwand von einem in die Kammer (26) hineinragenden Ringbund (86) umgeben ist, den ein Ende der schraubenförmig ausgebildeten Rückstellfeder (50) umgreift.

10. Magnetventil nach einem der vorstehenden Ansprüche, dadurch gekennzeichnet, daß zwischen der Elektromagneteinheit (12) und dem Ventilgehäuse (10) eine die Kammer verschließende Trennplatte (60) eingefügt ist.

11. Magnetventil nach einem der vorstehenden Ansprüche, dadurch gekennzeichnet, daß die Trennplatte (60) an ihren den Polen (16, 22) der Elektromagneteinheit (12) gegenüberliegenden Bereichen magnetisch leitend und an den übrigen Bereichen unmagnetisch ausgebildet ist.

## Claims

1. Solenoid valve with an oblong cuboid valve housing (10; 10a), in which two seal seats and an oblong chamber (26) are formed, with a bar-shaped armature (28) which is accomodated in the chamber (26) and is preloaded in one of two switching positions by means of a return spring (50), and with a solenoid unit (12) which is joined to the valve housing (10; 10a) on the side of the housing opposite the seal seats, with the armature (28) having a blunt edge (30) on the side facing the solenoid unit (12) and being pivotally mounted and the return spring (50) engaging in a recess (44) in the armature (28) on the side of the armature opposite the seal seats and being fixed in position on the valve housing (10), characterised by the armature (28) being inserted in a loose condition in the chamber (26) and being mounted with its blunt edge (30) on a plane supporting area (24) without being fixed in position.

2. Solenoid valve in accordance with Claim 1, characterised by the internal walls of the chamber (26) acting as stop faces for the armature (28), which in both switching positions only has enough distance from these internal walls of the chamber (26) to be able to move freely.

3. Solenoid valve in accordance with Claim 1 or 2, characterised by the recess (44) of the armature (28) being located opposite one of the seal seats.

4. Solenoid valve in accordance with Claim 3, characterised by a further recess (42) being located in the armature (28) opposite the other seal seat.

5. Solenoid valve in accordance with Claim 4, characterised by one seal each (46, 48) being located in the recesses (42, 44) of the armature (28) and each of the seal seats being arranged at the end of nozzles (38, 40) projecting into the chamber.

6. Solenoid valve in accordance with Claim 5, characterised by the seals (46, 48) being supported movably to all sides in the recesses of the armature (28).

7. Solenoid valve in accordance with Claim 5 or 6, characterised by the helical return spring (50) encompassing one of the nozzles (40).

8. Solenoid valve in accordance with Claim 4, characterised by actuating tappets (78, 80) in the recesses each being flexibly connected to the armature (28) and the actuating tappets (78, 80) projecting through openings in one bottom wall of the chamber (26) as well as into an adjacent valve chamber (70), which is separated from the chamber (26) by a diaphragm (72) and which has seal seats, and the actuating tappets (78, 80) being connected to the diaphragm (72) at the end facing away from the armature (28), said diaphragm having integrally formed sealing elements (74, 76) opposite each of the seal seats.

9. Solenoid valve in accordance with Claim 8, characterised by one of the openings in the bottom wall being surrounded by aring collar (86) projecting into the chamber (26), said ring collar being encompassed by one end of the helical return spring (50).

10. Solenoid valve in accordance with any one of the preceding claims, characterised by a separating plate (60) which closes the chamber being inserted between the solenoid unit (12) and the valve housing (10).

11. Solenoid valve in accordance with any one of the preceding claims, characterised by the separating plate (60) being magnetically conductive in the areas located opposite the poles (16, 22) of the solenoid unit (12), and being nonmagnetic in the remaining areas.

## Revendications

1. Electrovanne comportant un corps de vanne (10 ; 10a) de forme carrée et étendue dans le sens longitudinal, dans lequel deux sièges étanches et une chambre oblongue (26) sont formés, comportant une armature (28) en forme de poutre, qui est logée dans la chambre (26) et est précontrainte par un ressort de rappel (50) dans l'une de deux positions de commutation, et comportant une unité électro-magnétique (12) qui est assemblée avec le corps de vanne (10 ; 10a) sur le côté opposé aux sièges étanches, l'armature (28) présentant un bord obtus (30) sur son côté orienté vers l'unité électromagnétique (12) et étant positionnée de manière pivotante, s'engageant avec le ressort de rappel (50) dans un creux (44) de l'armature (28) sur son côté opposé aux sièges étanches et ayant une position fixe sur le corps de vanne (10), caractérisée en ce que l'armature (28) est placée de façon mobile dans la chambre (26) et est appuyée sur une surface d'appui plane (24) par son bord obtus (30), sans fixation de position.

2. Electrovanne suivant la revendication 1, caractérisée en ce que les parois intérieures de la chambre (26) constituent des surfaces de butée pour l'armature (28), qui présente, dans les deux positions de commutation, un écart juste suffisant, par rapport aux parois intérieures de la chambre (26) , pour garantir sa liberté de mouvement.

3. Electrovanne suivant la revendication 1 ou 2, caractérisée en ce que le creux (44) de l'armature (28) est disposé en opposition à l'un des sièges étanches.

4. Electrovanne suivant la revendication 3, caractérisée en ce que dans la position opposée à l'autre siège étanche, un autre creux (42) est réalisé dans l'armature (28).

5. Electrovanne suivant la revendication 4, caractérisée en ce qu'un joint (46, 48) est disposé dans chacun des creux (42, 44) de l'armature (28) et en ce que chacun des sièges étanches est formé à l'extrémité d'une tuyère (38, 40) pénétrant dans la chambre.

6. Electrovanne suivant la revendication 5, caractérisée en ce que les joints (46, 48) situés dans les creux de l'armature (28) sont appuyés de tous côtés de manière mobile.

7. Electrovanne suivant la revendication 5 ou 6, caractérisée en ce que le ressort de rappel (50) à configuration hélicoïdale entoure l'une des tuyères (40).

8. Electrovanne suivant la revendication 4, caractérisée en ce que dans les creux, des taquets de commande (78, 80) sont à chaque fois raccordés de manière articulée à l'armature (28), en ce que les taquets de commande (78, 80) font saillie, par des ouvertures, dans une paroi de fond de la chambre (26) et dans une chambre de vanne (70) attenante, séparée de la chambre (26) par une membrane (72) et présentant des sièges étanches, et en ce que les taquets de commande (78, 80) sont raccordés, à leur extrémité opposée à l'armature (28), à la membrane (72), qui présente à chaque fois un élément d'étanchéité (74, 76) en position opposée aux sièges étanches.

9. Electrovanne suivant la revendication 8, caractérisée en ce que l'une des ouvertures de la paroi de fond est entourée par une collerette (86) pénétrant dans la chambre (26) et s'engageant avec une extrémité du ressort de rappel (50) à configuration hélicoïdale.

10. Electrovanne suivant l'une des revendications précédentes, caractérisée en ce qu'une plaque de séparation (60) obturant la chambre est insérée entre l'unité électromagnétique (12) et le corps de vanne (10).

11. Electrovanne suivant l'une des revendications précédentes, caractérisée en ce que la plaque de séparation (60) est magnétiquement conductrice au niveau de ses zones opposées aux pôles (16, 22) de l'unité électromagnétique (12) et n'est pas aimantée au niveau des autres zones.
